# FASCICULE DE BREVET EUROPEEN

(11) **EP 3 475 670 B1**
(45) Date de publication et mention de la délivrance du brevet: **21.04.2021**
(21) Numéro de dépôt: 17731570.2
(22) Date de dépôt: 21.06.2017
(51) Int. Cl.: G01F 23/68, G01F 23/70, G01F 23/76, G01N 9/00

(54) **SYSTÈME NUMÉRIQUE DE MESURE OPTIQUE ABSOLUE D'UN NIVEAU DE LIQUIDE DANS UN CONTENEUR PAR CORRÉLATION DE PRISES DE VUES**
DIGITALES SYSTEM ZUR ABSOLUTEN OPTISCHEN MESSUNG EINES FÜLLSTANDS IN EINEM BEHÄLTER DURCH KORRELATION VON FOTOS
DIGITAL SYSTEM FOR ABSOLUTE OPTICAL MEASUREMENT OF A LEVEL OF LIQUID IN A CONTAINER BY CORRELATION OF PHOTOGRAPHS

(30) Priorité: 24.06.2016 FR 1655904
(43) Date de publication de la demande: 01.05.2019
(73) Titulaire: INTERSENS, 75008 Paris (FR)
(72) Inventeur: MOREL-FATIO, Bruno, 75008 Paris (FR)
(74) Mandataire: Casalonga
(86) Numéro de dépôt international: PCT/EP2017/065177
(87) Numéro de publication internationale: WO 2017/220630

(56) Documents cités:
- WO-A-2015/049346
- WO-A1-96/41136
- WO-A1-98/12514
- WO-A2-2008/023282
- FR-A1- 2 538 105
- RU-C1- 2 285 908
- TW-A- 201 525 425
- US-A- 4 155 254
- US-A- 5 483 831

## Description

L'invention concerne un système de mesure absolue de niveau de liquide, et plus particulièrement un système de mesure optique absolue d'un niveau de liquide destiné à être utilisé dans un conteneur.

Le niveau de liquide dans un conteneur, un réservoir, ou une citerne, est généralement mesuré pour déterminer la quantité de liquide contenu dans un tel contenant. Différents dispositifs sont connus pour réaliser de telles mesures.

Un procédé de mesure connu consiste à mesurer de manière analogique la distance relative entre un flotteur positionné à la surface d'un liquide et un point fixe du conteneur. Cette mesure de distance relative exploite des phénomènes physiques tels que le temps de propagation d'une onde acoustique, électromagnétique ou autre.

L'inconvénient de tels procédés connus est que cette vitesse de propagation dépend à son tour des conditions physiques du milieu, comme la température ou la densité du milieu, qui influent sur la vitesse de propagation de l'onde. Il en résulte un premier niveau d'incertitudes de mesure difficiles à maîtriser.

De plus, de tels procédés mettent en œuvre de manière native des mesures analogiques, toujours entachées intrinsèquement de bruit de mesure, augmentant au final les incertitudes sur la mesure.

Il est également connu du document EP 0 303 221 un dispositif de mesure optique d'un niveau liquide dans un conteneur comprenant un laser, un flotteur sur lequel sont montés des moyens réfléchissants et un capteur photosensible apte à mesurer le temps de trajet du faisceau laser émis, le niveau de liquide étant déterminé à partir de la durée du trajet du faisceau laser émis.

Il est aussi connu du document WO 82/04316 un dispositif de mesure optique d'un niveau de liquide comprenant un laser et un interféromètre apte à recevoir le faisceau laser réfléchi par des moyens réfléchissants montés sur un flotteur agencé dans un tube de guidage, qu'on nomme tube « tranquilisateur ». Le dispositif réalise ici la mesure du niveau à partir des interférences entre le faisceau émis et le faisceau reçu.

Il est aussi connu un procédé de mesurer le niveau en utilisant une mesure de variation de capacité. La mesure de variation de capacité exploite le rôle de condensateur joué par le liquide lui-même.

Les procédés de mesure décrits ci-dessus sont basés sur des phénomènes physiques analogiques qui sont toujours entachés de bruit de mesure augmentant l'imprécision des valeurs absolues. De tels dispositifs utilisant les procédés mentionnés ci-dessus ne permettent pas d'obtenir une mesure absolue du niveau, mais seulement une mesure relative du niveau.

On pourra enfin se référer au document FR 1552957 qui décrit un dispositif de mesure optique permettant de mesurer le niveau absolu du niveau de liquide dans un conteneur en utilisant une mire balayée par un faisceau lumineux émis par un flotteur. Mais, bien qu'avantageux à maints égards, ce dispositif peut délivrer des mesures erronées lorsque des impuretés sont présentes dans le liquide.

Le document WO9812514 décrit un appareil destiné à mesurer le niveau d'un liquide dans un conteneur, comprenant une échelle de mesure flexible, fixée par une extrémité à un poids afin de la retenir au fond du conteneur, et par l'extrémité opposée à un récepteur situé au sommet du conteneur. Ce document divulgue un flotteur adapté à être à moitié immergé. La partie se trouvant au-dessus du niveau du liquide contient un émetteur destiné à émettre de l'énergie, en particulier de la lumière, sur un côté de l'échelle, et des détecteurs destinés à détecter l'énergie, ou lumière, transmise à travers l'échelle, et à la convertir en un signal indiquant un code particulier sur l'échelle, lequel indique le niveau du liquide. Le flotteur est doté d'un émetteur relais destiné à envoyer les signaux détectés au récepteur situé au sommet du conteneur. Le récepteur contient un écran d'affichage ou fait office d'émetteur-récepteur permettant d'envoyer des signaux à une unité d'affichage à distance.

Le document US5483831 décrit un dispositif numérique de mesure de niveau de liquide par la lecture d'une série de nombres inscrits en binaire sur une échelle verticale. La mesure est réalisée par lecture de ces séries représentatives des divisions horizontales de l'échelle. Le dispositif comprend cette échelle verticale fixe, un flotteur mobile verticalement. Le flotteur est maintenu à distance de l'échelle fixe, et supporte une tête de lecture capable de lire individuellement chacun des nombres codés en binaire représentant le niveau de liquide. Un affichage est prévu pour fournir l'information issue de la lecture.

L'invention a pour objectif de pallier ces inconvénients en proposant un dispositif de mesure numérique et absolue, indépendant des conditions physiques du milieu et des impuretés présentes susceptibles de fausser les mesures.

L'invention a donc pour objet un système de mesure optique d'un niveau de liquide dans un conteneur, comprenant un support, un axe de guidage s'étendant à partir du support et comprenant une mire optique comprenant des codes binaires distincts correspondant chacun à un échelon de niveau du liquide dans le conteneur, et un flotteur mobile apte à coulisser le long de l'axe de guidage selon le niveau de liquide.

Ce système comporte au moins un ensemble de prise de vues monté sur le flotteur et comprenant un organe d'éclairage de la mire et un dispositif de prise de vues apte à acquérir des images bidimensionnelles de la mire, lesdites images acquises par le dispositif de prise de vues englobant un ensemble de plusieurs codes binaires correspondant à des échelons respectifs de niveau.

Ainsi, en considérant, lors de la prise de vue et du traitement d'images associé de plusieurs échelons de niveaux de liquide, on s'affranchit notamment de la présence d'impuretés qui pourraient être présentes entre le dispositif de prise de vues et un code de la mire, qui pourrait fausser les résultats fournis par le système de mesure optique.

En effet, dans un mode de réalisation, le système comprend des moyens de traitement associés à l'ensemble de prise de vues et aptes à déterminer un niveau de liquide à partir d'une image acquise par le dispositif de prise de vues, ladite image contenant les codes de multiples niveaux successifs.

Avantageusement, l'axe de guidage comprend un ou plusieurs rails électriquement conducteurs s'étendant le long de l'axe de guidage, le flotteur comprenant, quant à lui, des éléments de contact électrique montés en regard des rails conducteurs de l'axe de guidage, les éléments de contact électrique étant configurés pour être en contact avec les rails conducteurs et raccordés audit ensemble de prise de vues.

On pourra prévoir que le système comporte un module de communication couplé au support, les éléments de contact électrique et les rails conducteurs étant configurés pour transmettre les données issues de l'ensemble de prise de vues au module de communication.

Selon encore une autre caractéristique du système de mesure optique selon l'invention, le flotteur comprend un orifice apte à recevoir l'axe de guidage vertical de manière à laisser coulisser le flotteur le long de l'axe de guidage.

En outre, un raccord mécanique est utilisé pour relier une extrémité inférieure de l'axe de guidage avec le fond du conteneur et à maintenir l'axe de guidage selon une direction verticale, le support étant relié à une extrémité supérieure de l'axe de guidage.

Dans un mode de réalisation, le système comprend en outre un dispositif de correction apte à appliquer un facteur de correction de la mesure réalisée en fonction de la masse volumique du liquide dans le conteneur.

Par exemple, le dispositif de correction comprend un flotteur mobile secondaire monté de manière coulissante par rapport au flotteur principal mobile le long de l'axe de guidage et des moyens pour mesurer le déplacement relatif du flotteur secondaire par rapport au flotteur principal.

Avantageusement, le flotteur secondaire comprend une mire optique secondaire et le flotteur primaire comprend un ensemble secondaire de prise de vues comprenant un organe secondaire d'éclairage de la mire secondaire et un dispositif secondaire de prise de vues apte à acquérir des images de la mire secondaire, associé à des moyens de traitement permettant de fournir une mesure d'enfoncement du flotteur secondaire par rapport au flotteur primaire.

D'autres buts, avantages et caractéristiques de l'invention apparaîtront à l'examen de la description détaillée d'un mode de réalisation de l'invention nullement limitatif, et des dessins annexés, sur lesquels :
- la figure 1 représente, de manière schématique, un système de mesure optique absolue selon un mode de réalisation de l'invention ;
- la figure 2 représente une vue de dessus du flotteur et de l'axe de guidage du système illustré sur la figure 1 ; et
- la figure 3 illustre un exemple de codage binaire prévu sur l'axe de guidage.

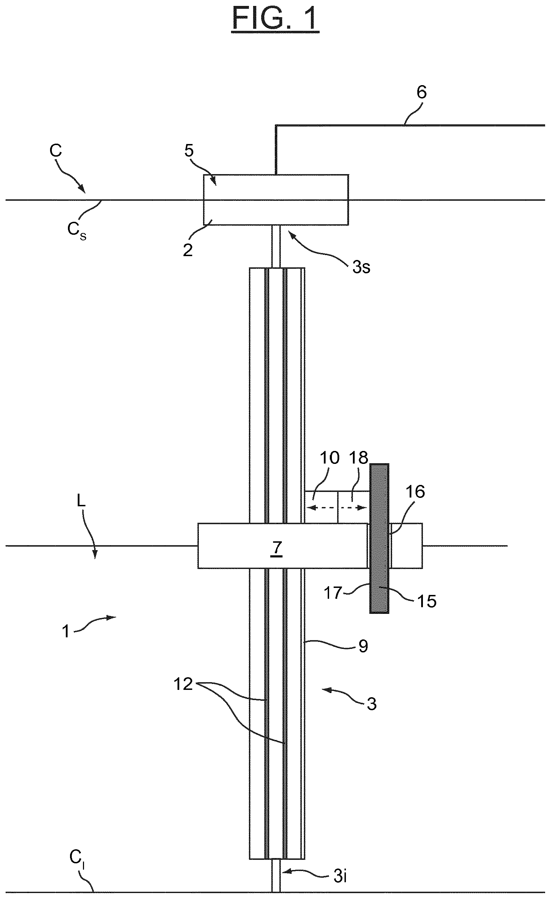

Sur la figure 1 est représenté de manière schématique un système 1 de mesure optique absolue d'un niveau de liquide L dans un conteneur C selon un mode de réalisation de l'invention.

Une paroi supérieure *C_{S}* et une paroi inférieure *C_{I}* du conteneur C sont représentées sur la figure 1. Le dispositif 1 de mesure optique absolue comprend un support 2 apte à être fixé sur la paroi supérieure *C_{S}* du conteneur C. Le support 2 peut être fixé de manière réversible pour pouvoir retirer le dispositif 1 en cas de maintenance.

Le système 1 comprend un axe de guidage 3 vertical doté d'un montant d'extrémité supérieure 3s raccordé mécaniquement au support 2 et d'un montant d'extrémité inférieure 3i fixé à la paroi inférieure C*_{I}* du conteneur C. Le montant inférieur 3i est configuré pour maintenir l'axe de guidage 3 dans un axe vertical. L'axe de guidage 3 possède une hauteur inférieure à la distance séparant la paroi supérieur *C_{S}* de la paroi inférieure *C_{I}.* On notera que, pour pallier les inconvénients liés à la dilatation de l'axe de guidage 3, l'un ou l'autre des supports d'extrémité 3i ou 3s peut être déformable longitudinalement. On pourra par exemple prévoir que l'un des montants d'extrémité 3s ou 3i est réalisé sous la forme de tiges coaxiales déplaçables l'une dans l'autre, l'autre montant d'extrémité étant dès lors rigide.

Le support 2 peut, par exemple, comprendre un module 5 de communication et d'alimentation comportant un bloc d'alimentation configuré pour délivrer un courant d'alimentation électrique au système 1 et un bloc de communication configuré pour échanger des données de mesure et de configuration avec ce dernier.

Comme on le voit, le module de communication et d'alimentation communique avec un faisceau de câbles électriques 6 d'alimentation et de transfert de données raccordés à un appareil externe d'alimentation et de traitement de données.

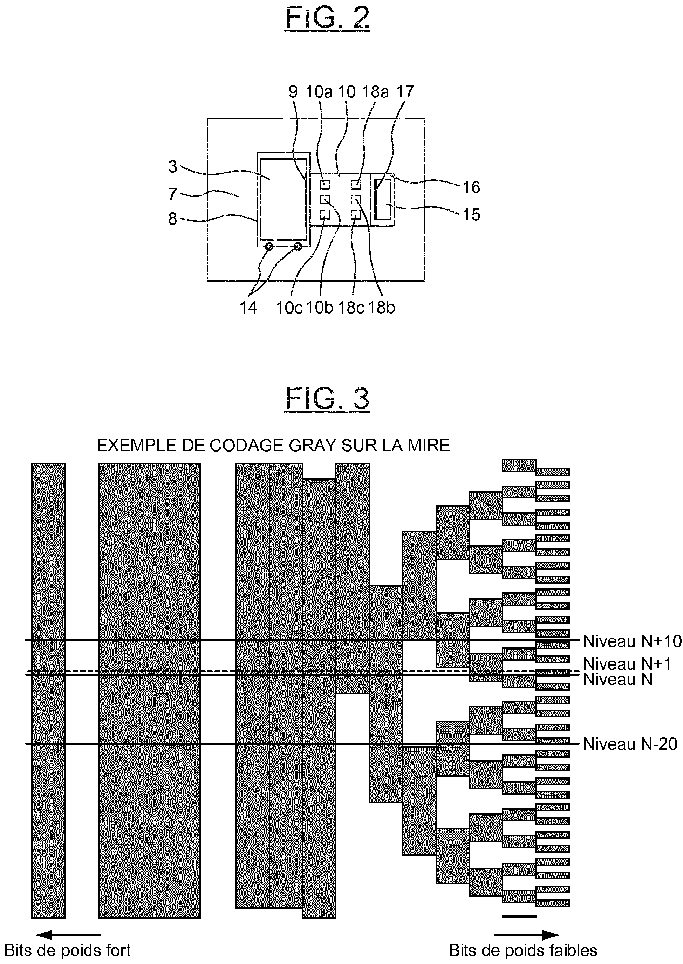

En se référant également à la figure 2, qui représente une vue de dessus du système 1 de la figure 1, le système 1 comporte un flotteur 7 comportant un orifice 8 apte à recevoir l'axe de guidage 3 de manière à permettre le coulissement du flotteur 7 le long de l'axe de guidage 3 en fonction du niveau de la surface du liquide L dans le conteneur C.

L'axe de guide 3 comporte en outre une mire optique 9 réalisée par exemple sur une plaque apposée sur l'axe de guidage 3. La mire 9 s'étend selon toute la hauteur de l'axe 3 et comporte un codage binaire comprenant un ensemble de codes binaires distincts qui correspondent chacun à un échelon de niveau de liquide dans le conteneur.

On a représenté sur la figure 3 un exemple de codage binaire formé dans la mire 9.

Comme on le voit, le codage utilisé dans le cadre du mode de réalisation décrit, est ici un codage Gray.

En référence à la figure 3, sur laquelle on a représenté un exemple de codage Gray constitutif de la mire 9, un tel codage comporte, pour chaque échelon de niveau, des bandes sombres et claires juxtaposées de la gauche vers la droite de manière à former, pour chaque niveau, un code, ici à 16 bits. Entre deux échelons consécutifs, seul un bit est différent, éliminant ainsi les ambiguïtés liées aux transitions multiples.

On notera que le codage Gray est un code bien connu de l'homme du métier. Il ne sera donc pas décrit en détail par la suite.

On notera toutefois que, sur la figure 3, quatre niveaux ont été repérés, à savoir les niveaux N, N+1, N+10 et N-20.

Par exemple, le niveau N est codé au moyen du mot binaire suivant :
1011101111100101

Le système 1 est, par ailleurs, doté d'un ensemble de prise de vues 10 montées sur le flotteur 7 et qui porte un organe 10a d'éclairage de la mire et un dispositif 10b de prise de vues tourné vers la mire 9 et focalisé de manière à acquérir une vue du code de la mire de manière à lire le code binaire situé en regard du dispositif de prise de vues.

Le dispositif de prise de vues est raccordé à des moyens de traitement 10c qui sont adaptés pour reconnaître différents mots binaires, localisés à des hauteurs différentes, captés par le dispositif de prise de vues pour en déduire le niveau du flotteur.

De manière purement illustrative, ces moyens de traitement 10c ont été représentés sur le flotteur 7. Bien entendu, de tels moyens de traitement peuvent être situés à l'extérieur du conteneur C et traiter les données d'images captées par le dispositif de prise de vues qui lui sont transmises par le faisceau de câbles 6.

On notera que tous types de moyens de traitement peuvent être utilisés pour identifier les mots binaires captés par le dispositif de prise de vues et pour en déduire le niveau du liquide.

Bien entendu, on prendra en compte le décalage du dispositif de prise de vues par rapport au niveau réel du liquide par rapport au flotteur.

Comme indiqué précédemment, le système communique avec l'extérieur du conteneur par l'intermédiaire d'un faisceau 6 de câbles dédiés à l'alimentation du système et au transfert de données. Il peut, par exemple, s'agir de données de configuration du système, par exemple pour effectuer les différents réglages du dispositif de prise de vue. Bien entendu, le niveau identifié ou les données acquises transitent également par le faisceau de câbles 6.

L'axe de guidage comprend à cet effet un ou plusieurs rails conducteurs 12 réalisés, par exemple, sous la forme d'une ou plusieurs gorges s'étendant verticalement sur toute la hauteur de l'axe de guidage et comprenant une surface électriquement conductrice. Les rails 12 sont ici couplés via le support 2 au module de communication et d'alimentation pour acheminer ainsi le courant électrique fourni par le bloc d'alimentation et les données véhiculées sur le faisceau de câbles 6 jusqu'aux dispositifs électroniques montés sur le flotteur 7.

Ces dispositifs sont électriquement raccordés aux rails conducteurs 12 grâce à des balais conducteurs 14 intégrés au flotteur et en contact électrique avec les rails 12 intégrés au guide 3.

Comme indiqué précédemment, le flotteur 7 supporte un ensemble 10 de prise de vues pour assurer l'acquisition d'un code binaire situé en regard de l'ensemble de prise de vues.

On notera que, de préférence, le dispositif de prise de vues intégré à l'ensemble 10 est focalisé de manière à acquérir plusieurs codes binaires, par exemple un ensemble de N mots binaires situés au-dessus du niveau à mesurer et N mots binaires correspondant à des échelons de niveau situés en-dessous du niveau à mesurer.

Les moyens de traitement 10c assurent, quant à eux, le traitement de l'ensemble des codes binaires captés par le dispositif de prise de vues et assurent une corrélation des différents niveaux détectés pour en déduire le niveau du flotteur.

Ainsi, les moyens de traitement sont en mesure d'identifier le niveau réel du flotteur même si une anomalie survient, par exemple la présence d'impuretés qui occultent certains bits du code du niveau à mesurer et créent une tache dans l'image captée.

Par ailleurs, comme visible sur la figure 1, le système 1 comporte un flotteur secondaire 15 qui est monté de manière coulissante à l'intérieur d'une cavité 16 pratiquée à l'intérieur du flotteur principal 7.

Ce flotteur 15 comporte également une mire optique numérique 17, par exemple identique à la mire 9 décrite précédemment, tandis que le flotteur 7 supporte un ensemble secondaire 18 de prise de vues comportant également un organe 18a secondaire d'éclairage de la mire secondaire, un dispositif secondaire 18b de prise de vues apte à acquérir des images de la mire secondaire, et des moyens de traitement d'images 18c assurant le traitement des images issues du dispositif secondaire de prise de vues en liaison avec les moyens de traitement d'images 10c assurant le traitement des images issues du dispositif primaire. Les moyens de traitement d'image 18c du flotteur secondaire coopèrent ainsi avec les moyens de traitement d'image 10c du flotteur principal 7 de manière à fournir à ces moyens de traitement d'image 10c des informations complémentaires portant sur l'enfoncement du flotteur secondaire par rapport au flotteur primaire.

Sur la figure 2, ces moyens secondaires de traitement d'image ont été intégrés à l'ensemble secondaire de prise de vues. Mais on pourrait également, sans sortir du cadre de l'invention, prévoir ces moyens de traitement à l'extérieur du conteneur C.

Cet ensemble secondaire de prise de vues est destiné à acquérir une image d'un ou de plusieurs mots binaires de codage du niveau relatif du flotteur secondaire par rapport au flotteur principal 7.

Ainsi, en fonction de la position du flotteur secondaire par rapport au flotteur principal, il est possible de déterminer par calcul la masse volumique du liquide L, pour appliquer un facteur de correction à la mesure réalisée par l'ensemble principal de prise de vues et les moyens de traitement correspondants afin de corriger la mesure de niveau en fonction de la masse volumique du liquide L dans le conteneur. On notera toutefois que le second flotteur et l'ensemble de prise de vues correspondant restent optionnels.

Comme on le conçoit, l'invention qui vient d'être décrite, qui utilise un axe de guidage portant une mire sur laquelle sont formés des codes servant au codage d'échelons de mesure et un ou plusieurs ensembles de prise de vues qui assurent une détection bidimensionnelle du code porté par la mire, permet d'améliorer la robustesse des mesures fournies par le système, en s'affranchissant notamment des anomalies de détection dues à des impuretés présentes dans le liquide.

## Revendications

1. Système de mesure optique d'un niveau de liquide (L) dans un conteneur (C), comprenant un support (2), un axe de guidage (3) s'étendant à partir du support et comprenant une mire optique (9) comprenant des codes binaires distincts correspondant chacun à un échelon de niveau de liquide dans le conteneur, et un flotteur (7) mobile apte à coulisser le long de l'axe de guidage selon le niveau de liquide (L), le système comportant au moins un ensemble de prise de vues (10) monté sur le flotteur et comprenant un organe d'éclairage (10a) de la mire et un dispositif de prise de vues (10b), **caractérisé en ce que** le dispositif de prise de vues (10b) est apte à acquérir des images bidimensionnelles de la mire, lesdites images acquises par le dispositif de prise de vues englobant un ensemble de plusieurs codes binaires correspondant à ces échelons respectifs de niveau.

2. Système selon la revendication 1, comprenant des moyens de traitement (10c) associés à l'ensemble de prise de vues et aptes à déterminer un niveau de liquide à partir d'une image acquise par le dispositif de prise de vues, ladite image contenant les codes de plusieurs niveaux successifs.

3. Dispositif selon l'une des revendications 1 et 2, dans lequel l'axe de guidage (3) comprend un ou des rails conducteurs (12) s'étendant le long de l'axe de guidage, le flotteur comprenant des éléments de contact électrique (14) montés en regard des rails conducteurs de l'axe de guidage, les éléments de contact électrique (14) étant configurés pour être en contact avec les rails conducteurs et raccordés audit ensemble de prise de vues.

4. Système selon la revendication 3, comprenant un module de communication et d'alimentation (5) couplé au support (2), les éléments de contact électrique et les rails conducteurs étant configurés pour transmettre les données issus de l'ensemble de prise de vues au module de communication.

5. Système selon l'une quelconque des revendications 1 à 4, dans lequel le flotteur (7) comprend un orifice (8) apte à recevoir l'axe de guidage (3) vertical de manière à laisser coulisser le flotteur le long de l'axe de guidage.

6. Système selon l'une des revendications 1 à 5, comprenant un raccord (4) mécanique apte à relier une extrémité inférieure (3i) de l'axe de guidage (3) avec le fond du conteneur (C) et à maintenir l'axe de guidage (3) selon une direction verticale, le support (2) étant relié à une extrémité supérieure (3s) de l'axe de guidage (3).

7. Système selon l'une quelconque des revendications 1 à 6, comprenant un dispositif de correction apte à appliquer un facteur de correction à la mesure réalisée en fonction de la masse volumique du liquide (L) dans le conteneur (C).

8. Système selon la revendication 7, dans lequel le dispositif de correction comprend un flotteur mobile secondaire (15) monté de manière coulissante par rapport au flotteur principal mobile le long de l'axe de guidage et des moyens pour mesurer le déplacement relatif du flotteur secondaire par rapport au flotteur principal.

9. Système selon la revendication 7, dans lequel le flotteur secondaire (15) comprend une mire optique (17) secondaire et le flotteur principal (7) comporte un ensemble de prise de vues (18) comprenant un organe secondaire d'éclairage (18a) de la mire secondaire et un dispositif secondaire (18b) de prise de vues apte à acquérir des images de la mire secondaire, associé à des moyens de traitement (18c) permettant de fournir une mesure d'enfoncement du flotteur secondaire (15) par rapport au flotteur primaire (7).

## Patentansprüche

1. System zur optischen Messung eines Füllstandes von Flüssigkeit (L) in einem Behälter (C), umfassend einen Halter (2), eine Führungsachse (3), die sich aus dem Halter erstreckt und einen optischen Messraster (9) umfasst, die verschiedene Binärcodes umfasst, die jeweils einer Füllstandstufe von Flüssigkeit in dem Behälter entsprechen, und einen beweglichen Schwimmer (7), der imstande ist, je nach Füllstand von Flüssigkeit (L) entlang der Führungsachse zu gleiten, wobei das System mindestens eine Bildaufnahmeeinheit (10) beinhaltet, die auf dem Schwimmer montiert ist, und ein Beleuchtungsorgan (10a) des Messrasters und eine Bildaufnahmevorrichtung (10b) umfasst, **dadurch gekennzeichnet, dass** die Bildaufnahmevorrichtung (10b) imstande ist, zweidimensionale Bilder des Messrasters zu erfassen, wobei die durch die Bildaufnahmevorrichtung erfassten Bilder eine Einheit von mehreren Binärcodes einschließen, die diesen jeweiligen Füllstandstufen entsprechen.

2. System nach Anspruch 1, Verarbeitungsmittel (10c) umfassend, die der Bildaufnahmeeinheit zugewiesen, und imstande sind, einen Flüssigkeitsfüllstand aus einem Bild zu bestimmen, das durch die Bildaufnahmevorrichtung erfasst wird, wobei das Bild die Codes mehrerer aufeinanderfolgender Füllstände enthält.

3. Vorrichtung nach einem der Ansprüche 1 und 2, wobei die Führungsachse (3) eine oder mehr Leitschienen (12) umfasst, die sich entlang der Führungsachse erstrecken, wobei der Schwimmer elektrische Kontaktelemente (14) umfasst, die gegenüber den Leitschienen der Führungsachse montiert sind, wobei die elektrischen Kontaktelemente (14) konfiguriert sind, um in Kontakt mit den Leitschienen zu sein und an die Bildaufnahmeeinheit angeschlossen sind.

4. System nach Anspruch 3, ein Kommunikations- und Versorgungsmodul (5) umfassend, das an den Halter (2) gekoppelt ist, wobei die elektrischen Kontaktelemente und die Leitschienen konfiguriert sind, um die aus der Bildaufnahmeeinheit stammenden Daten, zum Kommunikationsmodul zu übertragen.

5. System nach einem der Ansprüche 1 bis 4, wobei der Schwimmer (7) eine Öffnung (8) umfasst, die imstande ist, die vertikale Führungsachse (3) derart aufzunehmen, um den Schwimmer entlang der Führungsachse gleiten zu lassen.

6. System nach einem der Ansprüche 1 bis 5, einen mechanischen Anschluss (4) umfassend, der imstande ist, ein unteres Ende (3i) der Führungsachse (3) mit dem Boden des Behälters (C) zu verbinden, und die Führungsachse (3) in einer vertikalen Richtung zu halten, wobei der Halter (2) mit einem oberen Ende (3s) der Führungsachse (3) verbunden ist.

7. System nach einem der Ansprüche 1 bis 6, eine Korrekturvorrichtung umfassend, die imstande ist, in Abhängigkeit vom Volumengewicht der Flüssigkeit (L) in dem Behälter (C) einen Korrekturfaktor auf die durchgeführte Messung anzuwenden.

8. System nach Anspruch 7, wobei die Korrekturvorrichtung einen beweglichen Sekundärschwimmer (15) umfasst, der in gleitender Form in Bezug auf den entlang der Führungsachse beweglichen Hauptschwimmer montiert ist, und Mittel zum Messen der relativen Verschiebung des Sekundärschwimmers in Bezug auf den Hauptschwimmer.

9. System nach Anspruch 7, wobei der Sekundärschwimmer (15) einen optischen Sekundärmessraster (17) umfasst und der Hauptschwimmer (7) eine Bildaufnahmeeinheit (18) beinhaltet, die ein Sekundärbeleuchtungsorgan (18a) des Sekundärmessrasters und eine Sekundär-Bildaufnahmevorrichtung (18b) umfasst, die imstande ist, Bilder des Sekundärmessrasters zu erfassen, die den Verarbeitungsmitteln (18c) zugewiesen ist, die es ermöglichen, eine Einsenkungsmessung des Sekundärschwimmers (15) in Bezug auf den Primärschwimmer (7) bereitzustellen.

## Claims

1. A system for optical measurement of a liquid (L) level in a container (C), comprising a support (2), a guide axis (3) extending from the support and comprising an optical target (9) comprising distinct binary codes each corresponding to a grade of liquid level in the container, and a movable float (7) capable of sliding along the guide axis according to the liquid (L)level, the system including at least at one photographing assembly (10) mounted on the float and comprising a target lighting member (10a) and a photographing device (10b), **characterised in that** the photographing device (10b) is capable of acquiring two-dimensional images of the target, said images acquired by the photographing device involving a set of several binary codes corresponding to these respective level grades.

2. The system according to claim 1, comprising processing means (10c) associated with the photographing assembly and capable of determining a liquid level from an image acquired by the photographing device, said image containing the codes of several successive levels.

3. A device according to one of claims 1 and 2, wherein the guide axis (3) comprises one or more conductive rails (12) extending along the guide axis, the float comprising electrical contact elements (14) mounted opposite the conductive rails of the guide axis, the electrical contact elements (14) being configured to be in contact with the conductive rails and connected to said photographing assembly.

4. The system according to claim 3, comprising a communication and power module (5) coupled to the support (2), the electrical contact elements and the conductive rails being configured to transmit the data coming from the photographing assembly to the communication module.

5. The system according to any one of claims 1 to 4, wherein the float (7) comprises an orifice (8) capable of receiving the vertical guide axis (3) so as to allow the float to slide along the guide axis.

6. The system according to one of claims 1 to 5, comprising a mechanical connector (4) capable of linking a lower end (3i) of the guide axis (3) with the bottom of the container (C) and maintaining the guide axis (3) in a vertical direction, the support (2) being linked to an upper end (3s) of the guide axis (3).

7. The system according to any one of claims 1 to 6, comprising a correction device capable of applying a correction factor to the measurement carried out according to the density of the liquid (L) in the container (C).

8. The system according to claim 7, wherein the correction device comprises a secondary movable float (15) slidably mounted relative to the main float movable along the guide axis and means for measuring the relative displacement of the secondary float relative to the main float.

9. The system according to claim 7, wherein the secondary float (15) comprises a secondary optical target (17) and the main float (7) includes a photographing assembly (18) comprising a secondary member (18a) for lighting the secondary target and a secondary photographing device (18b) capable of acquiring images of the secondary target, associated with processing means (18c) allowing to provide a measurement of the sinking of the secondary float (15) compared to the primary float (7).
